# EUROPÄISCHE PATENTSCHRIFT

(11) **EP 2 662 578 B1**
(45) Veröffentlichungstag und Bekanntmachung des Hinweises auf die Patenterteilung: **23.09.2015**
(21) Anmeldenummer: 13163459.4
(22) Anmeldetag: 12.04.2013
(51) Int. Cl.: F16B 12/24, A47G 1/10, E06B 3/667, F16B 5/00

(54) **Flachdübel sowie Verbindung unter Verwendung eines Flachdübels**
Flat dowel and connection using a flat dowel
Cheville plate et liaison en utilisant une cheville plate

(30) Priorität: 10.05.2012 DE 102012104114
(43) Veröffentlichungstag der Anmeldung: 13.11.2013
(73) Patentinhaber: Schulte, Guido, 59602 Rüthen-Meiste (DE)
(72) Erfinder: Schulte, Guido, 59602 Rüthen-Meiste (DE); Eschlbeck, Franz-Josef, 83209 Prien am Chiemsee (DE)
(74) Vertreter: Ksoll, Peter

(56) Entgegenhaltungen:
- EP-A2- 1 989 956
- DE-A1- 19 604 243
- US-A- 4 373 829
- US-B1- 6 568 873

## Beschreibung

Die vorliegende Erfindung betrifft einen Flachdübel zum Einsatz zwischen zwei Bauelementen gemäß den Merkmalen im Oberbegriff von Patentanspruch 1.

Die vorliegende Erfindung betrifft weiterhin eine Verbindung zweier Bauelemente gemäß den Merkmalen im Oberbegriff von Patentanspruch 11.

Aus dem Stand der Technik ist es bekannt zum Zusammenbau von Möbeln, Türrahmen, Türfuttern oder aber auch Bilderrahmen die Bauteile mit Stecksystemen formschlüssig zu koppeln oder aber zu verleimen. Zumeist werden Dübel zur Generierung einer zusätzlichen Formschlusskraft oder aber auch als Positionierhilfen zwischen zwei Bauelementen eingesetzt.

Diese Dübel können beispielsweise als Holzdübel ausgebildet sein und hier insbesondere als Runddübel oder aber auch Stiftdübel oder alternativ auch als Flachdübel. Flachdübel sind insbesondere Dübel die eine flache, in einer Draufsicht ellipsenförmige Geometrie aufweisen.

Beispielsweise sind solche Flachdübel aus der EP 1 630 427 A1 bekannt, in dem sie als Verbindungselement zum Verbinden zweier Werkstücke dienen.

Diese Flachdübel sind auch als Lamellen bzw. Lamello bekannt. Sie werden in in die Holzflächen gefräste Nuten eingesteckt und ermöglichen so eine stabile unsichtbare Holzverbindung.

Weiterhin ist beispielsweise aus der EP 1 980 758 A2 eine alternative Ausführungsform eines solchen Verbindungselements zum Verbinden zweier Werkstücke bekannt, wobei das Verbindungselement Querrippen aufweist, die die zueinander zu fügenden Bauelemente zusätzlich lagefixieren.

Weiterhin ist aus der EP 1 989 956 A2 ein Flachdübelsystem bekannt, bei dem durch komplexen Formschluss zweier Flachdübel eine Verbindung zwischen zwei Bauelementen herstellbar ist.

Ferner ist aus der DE 196 04 243 A1 eine Flachdübelverbindung bekannt, wobei zwei Flachdübelhälften formschlüssig in eine jeweilige Nut eingedreht werden und dann die Bauteile mit den eingesetzten Flachdübelhälften ineinander gesteckt werden. Diese Ausgestaltung der Flachdübel ist besonders komplex, weshalb hohe Herstellungskosten mit den Flachdübelhälften einhergehen.

Ferner ist aus der US 4,373,829 A ein Flachdübel bekannt, der in eine Nut eingesteckt und in dieser verklebt wird. Die Verklebung erschwert jedoch die Handhabung insbesondere für ungeübte Monteure und macht eine Demontage des Flachdübels nahezu unmöglich.

Weitere Flachdübel sind beispielsweise aus der AT 373 046 B, der EP 1 630 427 A1, der EP 1 980 758 A2, der EP 1 989 956 A1 oder der WO 83/03287 A1 bekannt.

Aufgabe der vorliegenden Erfindung ist es, ausgehend vom Stand der Technik, einen Flachdübel bereit zu stellen, der eine einfache Handhabbarkeit besitzt, mit dem eine sichere Verbindung zu einem Bauelement herstellbar ist und der gegenüber aus dem Stand der Technik bekannten Flachdübeln kostengünstiger produzierbar ist. Ferner ist es Aufgabe der vorliegenden Erfindung eine entsprechende Verbindung unter Verwendung eines Flachdübels bereitzustellen.

Die zuvor genannte Aufgabe wird erfindungsgemäß mit einem Flachdübel zum Einsatz zwischen zwei Bauelementen gemäß den Merkmalen im Patentanspruch 1 gelöst.

Die zuvor genannte Aufgabe wird weiterhin mit einer Verbindung zweier Bauelemente gemäß den Merkmalen im Patentanspruch 11 gelöst.

Vorteilhafte Ausführungsvarianten der vorliegenden Erfindung sind Bestandteil der abhängigen Patentansprüche.

Der erfindungsgemäße Flachdübel zum Einsatz zwischen zwei Bauelementen, insbesondere zum Verbinden zweier Bauelemente, wobei der Flachdübel einen einstückigen ellipsenförmigen Grundkörper aufweist, wobei der Grundkörper in zwei Seitenabschnitte aufgeteilt ist, wobei in dem Grundkörper eine Federzunge in einem Winkel zu einer Grundkörperebene in einem Winkel zwischen 1° und 40° zu einer Grundkörperebene abstehend ausgebildet ist, wobei die Federzunge von einer Seitenkante aus sich zu einer Mittellängsachse erstreckend ausgebildet ist und dass der Flachdübel an zumindest_einer Seitenkante einer der zwei Seitenabschnitte eine gegenüber dem Grundkörper überstehende Rastleiste zum formschlüssien Einsatz in einem Bauelement aufweist.

Somit ist es möglich bei einem ellipsenförmigen Grundkörper den Flachdübel zunächst in eine dafür vorgesehene Nut an einem Bauelement einzudrehen. Insbesondere weist der ellipsenförmige Grundkörper hierzu mindestens einen Seitenabschnitt auf, wobei eine Seitenkante des Seitenabschnitts einen kreisbogenabschnittsförmigen Verlauf besitzt. Mit diesem Seitenabschnitt wird der Flachdübel zumindest teilweise in die Nut des Bauelementes eingedreht. Im Anschluss hieran steht ein Teil des Flachdübels, insbesondere der zweite Seitenabschnitt des Flachdübels gegenüber dem Bauelement und zwar gegenüber einer Seitenfläche des Bauelementes über.

Im Rahmen der Erfindung ist nun die Federzunge auf mindestens einem Seitenabschnitt ausgebildet. Dies kann derart gestaltet sein, dass die Federzunge an dem Seitenabschnitt des Flachdübels ausgebildet ist, der in das erste Bauelement eingedreht ist. Die Federzunge steht in einem Winkel zu der Grundkörperebene ab, so dass nach Abschluss des Eindrehvorganges und gewünschter bzw. gewollter Positionierung des Flachdübels in dem Seitenelement die Federzunge in einer dafür vorgesehenen Nut derart einrastet, dass ein weiteres Verdrehen des Flachdübels in dem ersten Bauelement unterbunden wird. Soll der Flachdübel aus dem ersten Bauelement gelöst werden so wird die Federzunge entgegen Ihrer Federkraft aus der Nut gedrückt und der Flachdübel aus dem ersten Bauelement gedreht.

In einer zweiten Ausführungsvariante ist die Federzunge derart ausgebildet, dass sie auf dem gegenüber einer Seitenfläche des ersten Bauelementes überstehendem Seitenabschnitt des Flachdübels angeordnet ist. Hierdurch ist es zum einen möglich den Flachdübel derart gegenüber dem ersten Bauelement zu verriegeln, dass ein weiteres Ausdrehen nicht möglich ist. Hierzu ist insbesondere eine Stirnseite der Federzunge an der Seitenfläche des ersten Bauelementes formschlüssig zur Anlage kommend angeordnet. Auch hier wäre es wiederum nötig die Federzunge entgegen der Federkraft derart zu bewegen, dass ein Teil der Federzunge beim Herausdehnen des Flachdübels in der Nut des ersten Bauelementes gleitet und hierdurch der Flachdübel in dem ersten Bauelement entriegelt wird.

In einer dritten erfindungsgemäßen Verwendung wird der erfindungsgemäße Flachdübel in ein erstes Bauelement eingedreht, wobei an dem gegenüberstehenden Seitenabschnitt ein zweites Bauelement angeordnet wird, dass dann aufgrund der Federkraft der Federzunge derart positioniert wird, dass das zweite Bauelement an dem gegenüber der Seitenwand des ersten Bauelementes überstehenden Teil des Flachdübels verriegelbar ist. Beispielsweise kann der Flachdübel so als Halter für einen Einlegeboden genutzt werden. Hierzu kann ein Einlegeboden an den Flachdübel vollständig zur Anlage gebracht werden und anschließend aufgrund der Federkraft der Federzunge in einem Verriegelungszustand gehalten werden.

In einer bevorzugten Ausführungsvariante ist der Grundkörper des Flachdübels in zwei Seitenabschnitte aufgeteilt, wobei die Federzunge von einer Seitenkante aus sich zu einer Mittellängsachse erstreckend ausgebildet ist. Somit ist die Federzunge von einer Seitenkante eines Seitenabschnittes, mithin einer Außenseite des Flachdübels sich zur Mitte des Flachdübels hin erstreckend ausgebildet, wobei die Orientierung in einem Winkel zu der Grundkörperebene erfolgt. Der Flachdübel ist hierdurch insbesondere sehr gut handhabbar, da eine nach außen orientierte abstehende Federzunge unhandlich ist und auch ein Verletzungsrisiko darstellen kann. Beispielsweise können in einer nach außen stehenden Federzunge bei der Montage Kleidungsstücke oder ähnliches einklemmen oder hängenbleiben.

Weiterhin bevorzugt ist an jedem Seitenabschnitt zumindest abschnittsweise umlaufend eine Rastleiste ausgebildet, wobei die beiden Rastleisten in entgegengesetzter Richtung orientiert sind. Die Rastleisten weisen im Querschnitt mit dem jeweiligen Seitenabschnitt eine L-förmige Konfiguration auf. Hierdurch wird das Eindrehen des Flachdübels in eine ebenfalls L-förmig konfigurierte Nut ermöglicht. Im Falle eines zweiten Bauelementes, welches beispielsweise als Einlegeboden ausgebildet ist, ist die Schiebenut derart zu wählen, dass sie über den L-Steg, mithin über die Rastleiste schiebbar ist. Hat das zweite Bauelement seine gewünschte Endposition erreicht, so kann es in dieser verriegelt werden, in dem eine zusätzliche Rastnut in der Schiebenut vorgesehen ist, wobei die Rastleiste in die Rastnut formschlüssig eingreift. Damit diese Position eingehalten wird, übt die Federzunge eine Federkraft aus, wodurch die Rastleiste in der Rastnut positioniert bleibt. Ist nun ein Entriegeln erwünscht, so muss entgegen der Federkraft gewirkt werden um zunächst die Rastleiste aus der Rastnut zu befördern und sodann das zweite Bauelement entlang der Schiebenut über den zweiten Seitenabschnitt und die Rastleiste bewegt werden.

In einer weiteren bevorzugten Ausführungsvariante der vorliegenden Erfindung erstreckt sich die Federzunge in die gleiche Richtung, in die die Rastleiste des Seitenabschnittes der den Seitenabschnitt gegenüberliegt in dem die Federzunge ausgebildet ist. Dies hat sich als besonders vorteilig erwiesen, um den erfindungsgemäßen Flachdübel im ersten Bauelement zu verriegeln oder aber den erfindungsgemäßen Flachdübel als Auflager für ein Regaleinlegeboden zu verwenden.

In einer weiteren bevorzugten Ausführungsvariante erstreckt sich die Federzunge bis nahe an die Mittellängsachse des Flachdübels. Somit ist die Federzunge von einem Seitenrand des Flachdübels in Richtung zur Mittellängsachse bis nahe an die Mittellängsachse des Flachdübels erstreckend ausgebildet. Zwischen der Mittellängsachse und der Stirnseite der Federzunge ist bevorzugt ein minimaler Spalt zwischen 0,01 mm und 2 mm, insbesondere zwischen 0,1 mm und 1 mm ausgebildet. Hierdurch ist es möglich, dass die Federzunge bei einem Flachdübel der eine gesamte Längenausdehnung von nur wenigen Zentimetern aufweist in dem Grundkörper des Flachdübels bewegbar angeordnet ist.

Bei Eindrücken der Federzunge entgegen der Federkraft an dem Abschnitt des Grundkörpers in dem die Mittellängsachse ausgebildet ist gleitet die Federzunge somit vorbei. Der Flachdübel kann somit zum einen leicht durch Eindrücken der Federzunge montiert werden, aber auch in einem montierten und verriegelten Zustand durch Einwirken entgegen der Federkraft der Federzunge wieder demontiert werden. Weiterhin bevorzugt weist die Federzunge des Flachdübels eine Stirnseite auf, wobei die Stirnseite orthogonal zu der Grundkörperebene orientiert angeordnet ist. Hierdurch ergibt sich eine plane Auflagerfläche in Form einer orthogonal zu der Grundkörperebene angeordneten Stirnseite, wobei die Federzunge selbst in einem Winkel zu der Grundkörperebene abstehend ausgebildet. Die Grundkörperebene ist im Normalfall eines montierten Flachdübels in einem 90°Winkel zu einer Seitenwand eines Bauelementes in das der Flachdübel eingedreht ist ausgerichtet. Bei einer Stirnseite, die orthogonal zu der Grundkörperebene ausgebildet ist, kommt somit die Stirnseite im Wesentlichen flächig an der Seitenfläche zur Anlage, wodurch ein Formschluss mit besonders hoher Festigkeit hergestellt wird.

Im Rahmen der Erfindung hat sich weiterhin vorteilig ein Winkel zwischen der Orientierung der Federzunge und der Grundkörperebene bevorzugt zwischen 2 und 30° erwiesen. In den zuvor genannten Winkelbereichen ist es möglich ein Optimum zwischen formschlüssigem Halt der Federzunge und einem Entgegenwirken gegenüber der Federkraft zur Montage oder aber auch zur Demontage zu erreichen. Insbesondere ist der Flachdübel dazu aus einem Holzwerkstoff, aus einem holzartigen Werkstoff oder aber auch aus einem Kunststoff und/oder Faserverbundwerkstoff ausgebildet. Insbesondere ist der Flachdübel aus HDF, MDF oder aber Duroplast ausgebildet.

Weiterhin bevorzugt ist die Stirnseite der Federzunge an ihren Übergängen zu einer Oberseite und einer Unterseite der Federzunge abgerundet ausgebildet. Hierdurch ergibt sich insbesondere wiederum bei der Montage des erfindungsgemäßen Flachdübels der Vorteil, dass die abgerundeten Kanten der Federzunge kein Verkanten, Verhacken oder aber Beschädigen bei Montage oder Demontage verursachen.

Weiterhin besonders bevorzugt ist die Federzunge einstückig und werkstoffeinheitlich aus dem Grundkörper ausgebildet. Im Rahmen der Erfindung ist der erfindungsgemäße Flachdübel somit als einteilig und werkstoffeinheitlich ausgebildet, weshalb er beispielsweise in einem einfachen Herstellungsverfahren aus einem Kunststoff oder Faserverbundwerkstoff herstellbar bzw. formbar ist. Hierdurch ergeben sich geringe Produktionskosten des erfindungsgemäßen Flachdübels.

Weiterhin bevorzugt weist die Federzunge eine quadratische oder eine rechteckige Konfiguration auf. Die quadratische oder rechteckige Konfiguration ermöglicht insbesondere bei Anliegen der Stirnseite der Federzunge gegenüber einer Seitenfläche des Bauelementes in dem der erfindungsgemäße Flachdübel in einem ersten Schritt montiert ist einen optimalen Formschluss, so dass der Flachdübel nicht aus dem Bauelement heausdrehbar ist. im Rahmen der Erfindung ist es jedoch auch möglich, die Federzunge des Flachdübels rund, elliptisch, sternförmig oder aber auch in einer Mischform der zuvor genannten Geometrien zu konfigurieren, was abhängig von einem der eingangs genannten Verwendungszwecke zu wählen ist.

Weiterhin bevorzugt sind mindestens zwei Federzungen in dem erfindungsgemäßen Flachdübel ausgebildet, insbesondere sind die Federzungen auf einem Seitenabschnitt ausgebildet und/oder auf beiden Seitenabschnitten ausgebildet, bevorzugt weisen die Federzungen der zwei Seitenabschnitte in voneinander verschiedene Richtungen. Im Rahmen der Erfindung ist es somit möglich die auf die Bauelemente wirkende Federkraft durch zwei Federzungen oder auch drei Federzungen auf einem Seitenabschnitt zu verdoppeln oder zu verdreifachen. Ferner ist es durch Federzungen die jeweils auf einem Seitenabschnitt ausgebildet sind möglich sowohl zur Montage des ersten Seitenabschnittes eine formschlüssige Verriegelung durch eine Federzunge zu realisieren, als auch an einem zweiten Bauelement der Montage dann eine zusätzliche Verriegelung mittels der Federzunge zu realisieren. Auch ist es im Rahmen der Erfindung vorstellbar zwei Federzungen auf einem Seitenabschnitt auszubilden, die in entgegengesetzte Richtungen zeigen.

Die zuvor genannte Aufgabe wird weiterhin erfindungsgemäß mit einer Verbindung unter Verwendung einer Federzunge aufweisend mindestens eines der zuvor genannten Merkmale derart gelöst, dass zwei Bauelemente, wobei die Bauelemente über ein Nut- und Federstecksystem unter Eingliederung des Flachdübels ineinander steckbar sind und formschlüssig zueinander lagefixierbar sind, wobei die Verbindung dadurch gekennzeichnet ist, dass eine Seitenfläche eines ersten Bauelements eine kreisabschnittsförmige Nut aufweist, wobei die Nut in einem Winkel von 45 bis 135° insbesondere 90° zu einer Seitenfläche des ersten Bauelementes angeordnet ist und der Flachdübel in die Nut formschlüssig eingedreht ist.

Mit der erfindungsgemäßen Verbindung lassen sich wiederum die bereits drei eingangs beschriebenen Verriegelungsarten des Flachdübels realisieren. Zum einen ist es möglich den Flachdübel mit Hilfe der Federzunge die in dem ersten Seitenabschnitt, der in das erste Seitenelement eingedreht ist in dem ersten Seitenelement zu verriegeln. Hierzu wird beim Eindrehen die Federzunge eingedrückt, so dann der Flachdübel in die kreisabschnittsförmige Nut formschlüssig eingedreht und bei Erreichen der Federzunge einer Federzungennut klickt oder schnappt die Federzunge in diese ein und der Flachdübel ist formschlüssig in dem ersten Bauelement verriegelt, wobei sein zweiter Seitenabschnitt gegenüber der Seitenfläche des ersten Bauelementes übersteht. Wird die Federzunge nun entgegen ihrer Federkraft bewegt, so kann anschließend der Flachdübel wiederum aus der Nut durch drehen herausbewegt werden.

Bei einer zweiten Ausführungsvariante wird die Federzunge in den Flachdübel eingedrückt und so dann der Flachdübel in die kreisabschnittsförmige Nut mit seinem ersten Seitenabschnitt eingedreht, wobei die Federzunge in dem zweiten Seitenabschnitt angeordnet ist. Hat der Flachdübel seine gewünschte Position in dem ersten Bauelement erreicht, schnappt die Federzunge derart ein, dass eine Stirnseite der Federzunge von dem zweiten Seitenabschnitt, also von außen kommend an die Seitenfläche des ersten Bauelementes zeigend orientiert ist und hier formschlüssig zur Anlage kommt gegebenenfalls mit einem gewissen Spiel. Auch hierdurch ist der Flachdübel in der kreisabschnittsförmigen Nut des ersten Bauelementes formschlüssig verriegelt, wobei bei Bewegen der Federzunge entgegen der Federkraft bis die Federzunge in der Grundkörperebene des Flachdübels liegt ist es wiederum möglich den Flachdübel aus dem ersten Bauelement herauszudrehen.

In einer Dritten Anwendung ist es möglich, dass der erfindungsgemäße Flachdübel analog zu der zuvor beschriebenen Ausführungsvariante an dem zweiten Seitenabschnitt ausgebildet ist, wobei der Flachdübel nicht oder nicht ausschließlich zur Verriegelung des Flachdübels genutzt wird, sondern entweder oder zeitgleich zur Aufbringung einer Federkraft auf das zweite Bauelement genutzt wird. Hierzu wird beispielsweise ein zweites Bauelement mit einer Schiebenut über die Federzunge und den zweiten Seitenabschnitt geschoben bis das zweite Bauelement seine gewünschte Zielposition erreicht hat. Die Federzunge übt dann eine Federkraft auf eine Innenseite der Schiebenut auf, so dass die gegenüberliegende Seite der Schiebenut mit der der Federzunge gegenüberliegenden Seite des zweiten Seitenabschnittes zur Anlage kommt. Unterstützt werden kann dies, wenn die Rastleiste an dem zweiten Seitenabschnitt in eine zusätzliche Rastnut die innerhalb der Schiebenut an der gewünschten Zielposition angeordnet ist formschlüssig zur Anlage kommt.

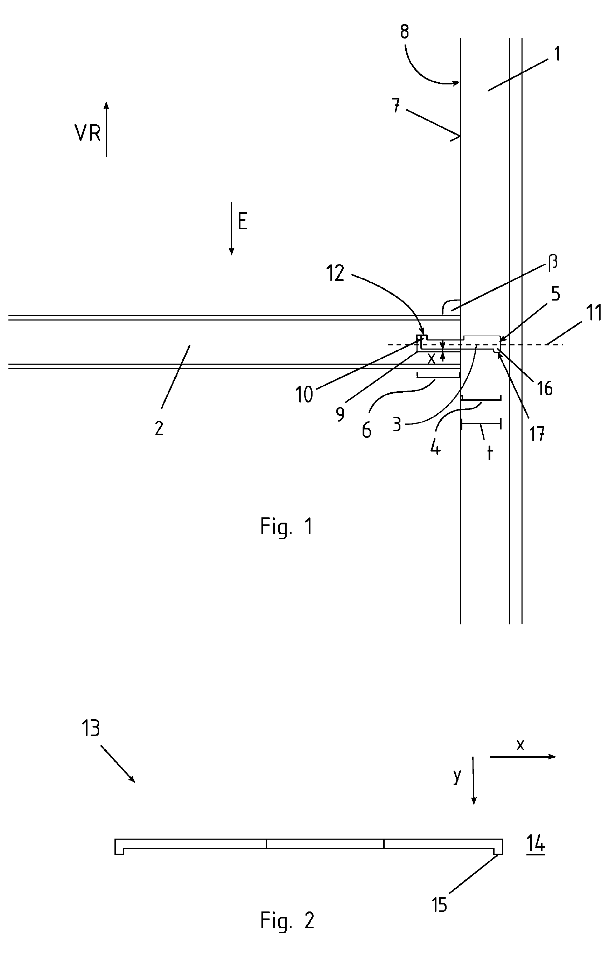

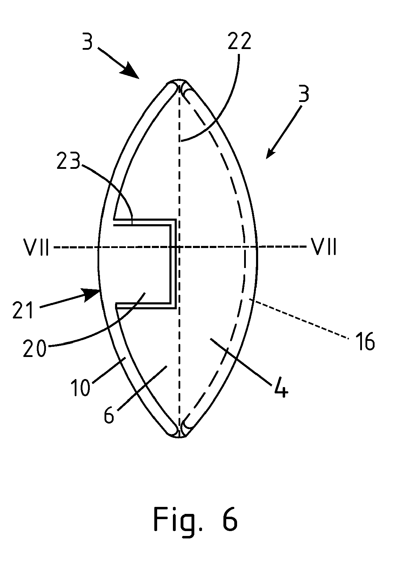

Weitere Vorteile, Merkmale, Eigenschaften und Aspekte der vorliegenden Erfindung sind Bestandteil der nachfolgenden Beschreibung. Bevorzugte Ausführungsvarianten sind in den schematischen Figuren 6 bis 8 dargestellt. Die Figuren 1 bis 5 zeigen eine Anordnung zweier Bauelemente zueinander, die mit einer nicht erfindungsgemäßen

Verbindung unter Eingliederung eines nicht erfindungsgemäßen Flachdübels ausgebildet werden können. Diese dienen dem einfachen Verständnis der Erfindung. Es zeigen:
- Figur 1: eine nicht erfindungsgemäße Verbindung in einer Querschnittsansicht;
- Figur 2: einen Fräser zur Herstellung der Nuten in einer Querschnittsansicht;
- Figur 3a und b: einen nicht erfindungsgemäßen Flachdübel in einer Draufsicht und in einer Querschnittsansicht;
- Figur 4: ein zweites Bauelement in einer Querschnittsansicht von oben und
- Figur 5: ein Stecksystem in einer Querschnittsansicht.
- Figur 6: zeigt den erfindungsgemäßen Flachdübel mit einer Federzunge
- Figur 7a und b: zeigt den erfindungsgemäßen Flachdübel jeweils in einer Querschnittsansicht
- Figur 8: zeigt eine erfindungsgemäße Verbindung unter Eingliederung eines erfindungsgemäßen Flachdübels mit Federzunge

In den Figuren werden für gleiche oder ähnliche Bauteile dieselben Bezugszeichen verwendet, auch wenn eine wiederholte Beschreibung aus Vereinfachungsgründen entfällt.

Figur 1 zeigt eine Verbindung in einer Querschnittsansicht aufweisend ein erstes Bauelement 1 und ein zweites Bauelement 2. Das erste Bauelement 1 und das zweite Bauelement 2 sind hier dargestellt in einem Winkel β von 90° angeordnet. Im Rahmen der Erfindung ist es jedoch auch möglich, eine Verbindung zwischen einem ersten 1 und einem zweiten 2 Bauelement in einem Winkel α ungleich 90° herzustellen. Zwischen dem ersten 1 und dem zweiten Bauelement 2 ist ein Flachdübel 3 eingegliedert, wobei der Flachdübel 3 mit einem ersten Abschnitt 4 in einer Nut 5 in dem ersten Bauelement 1 angeordnet ist und mit einem zweiten Abschnitt 6 gegenüber einer Oberfläche 7 der Seitenfläche 8 des ersten Bauteils 1 hier dargestellt orthogonal in Richtung zum zweiten Bauelement 2 absteht. Hierzu greift der zweite Abschnitt 6 des Flachdübels 3 in eine Schiebenut 9 des zweiten Bauelements 2 ein, wobei eine Rastleiste 10 des Flachdübels 3 orthogonal zu einer Mittellängsebene 11 des Flachdübels 3 in Vertikalrichtung VR orientiert nach oben zeigt. Die Rastleiste 10 ist dabei eine Rastnut 12 eingerastet, wobei das zweite Bauteil 2 in seiner Position aufgrund der Erdanziehungskraft E verbleibt. Das zweite Bauelement 2 ist zunächst über den Flachdübel 3 mit der Schiebenut 9 aufgeschoben worden und anschließend um die Höhe X abgesenkt worden, so dass die Rastleiste 10 und die Rastnut 12 in formschlüssigen Eingriff kommen.

Zur Herstellung sowohl der Rastnut 12 als auch der Nut 5 ist ein in Figur 2 dargestellter Fräser 13 verwendet, der einen kreisförmigen Querschnitt aufweist und am äußeren Ende 14 eine Frässtufe 15 aufweist, wobei der Fräser 13 zunächst in X-Richtung in das Bauteil bis zu dem tiefsten Punkt der Nut 5, dargestellt in Figur 1 mit dem Bezugszeichen t, eingefahren wird und anschließend in Y-Richtung um die Höhe x abgesenkt wird zum Ausbilden der Rastnut 12. Anschließend wird der Fräser 13 um den Betrag in Y-Richtung zurückgefahren und wiederum aus dem Bauteil um die X-Richtung herausgezogen. Somit wird die zusätzliche Nut 17 erzeugt, in die die Ratsleiste 16 eingedreht wird.

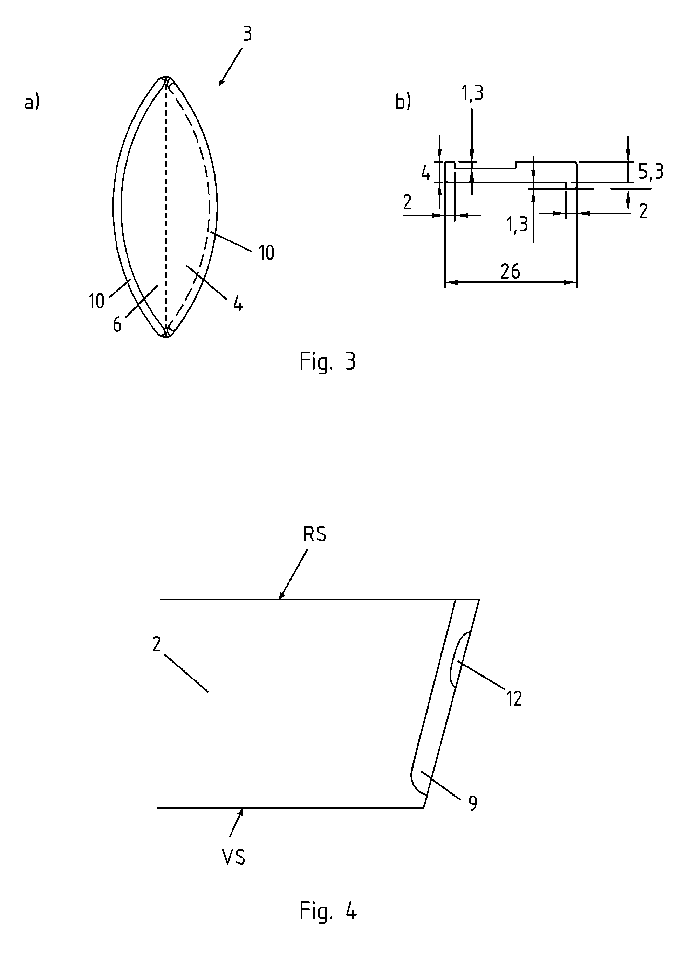

In die damit hergestellten Nuten 5 wird dann ein in Figur 3a und b dargestellter Flachdübel 3 zunächst an einem ersten Abschnitt 4 eingedreht, wobei dann der zweite Abschnitt 6 gegenüber der Oberfläche 7 des ersten Bauteils 1 übersteht. Hier ist zusätzlich dann eine Rastleiste 10 ausgebildet, die mit einer Rastnut 12 des zweiten Bauteils 2 formschlüssig in Eingriff kommt. Der erste Abschnitt 4 weist ebenfalls an der Unterseite eine Rastleiste 16 auf, die in der Nut 5 des ersten Bauteils 1 formschlüssig zum Eingriff kommt.

Ferner dargestellt sind in Figur 3b bevorzugte Bemaßungen in Millimeter des Flachdübels 3, die ein Optimum aus verwendetem Werkstoff, Handhabbarkeit und der damit verbundenen Festigkeitseigenschaften bilden.

Der Flachdübel 3 kann jedoch auch in anderen Bemaßungen als die in Figur 3b dargestellten Maßbereichen ausgebildet werden.

Ferner zeigt Figur 4 eine Querschnittsansicht in einer perspektivischen Ansicht auf ein zweites Bauelement 2, wobei eine Schiebenut 9 von der Rückseite RS erstreckend in Richtung zur Vorderseite VS ausgebildet ist. In der Schiebenut 9 selber ist dargestellt die kreisbogenabschnittsförmige Rastnut 12. Die Schiebenut 9 ist nicht durchgehend ausgebildet, so dass sie von der Vorderseite VS nicht sichtbar ist.

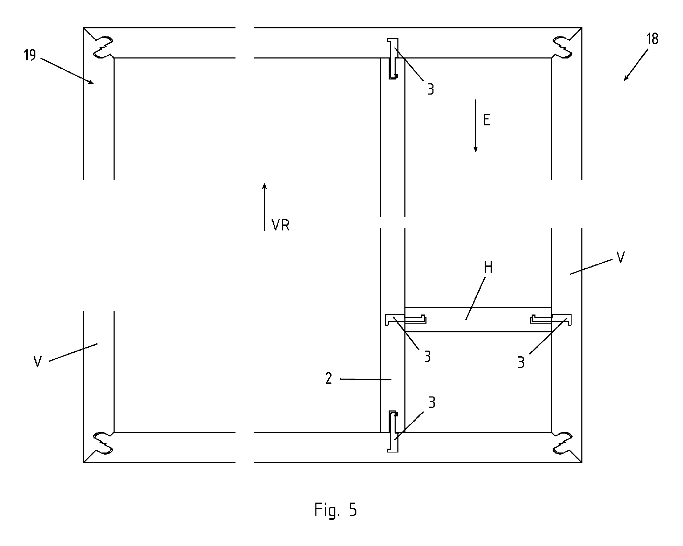

Figur 5 zeigt ein Stecksystem 18 aufweisend erste Bauelemente 1 in Form von Vertikalelementen V und zweite Bauelemente 2 in Form von Horizontalelementen H. Die ersten Bauelemente 1 in Form von Vertikalelementen V bilden einen außen umliegenden Korpus 19 aus. In dem Korpus 19 selber ist jedoch noch in Vertikalrichtung VR ein zweites Bauelement 2 angeordnet, das ebenfalls mit der Verbindung verriegelt ist. Hierzu wird zunächst das zweite Bauelement 2 in dem Korpus 19 mit der Verbindung angeordnet und sodann durch ein Horizontalelement H, welches ebenfalls durch die Verbindung in dem Korpus 19 gehalten ist, derart verriegelt, dass das Horizontalelement H als Distanzstück gegenüber dem zweiten Bauelement 2 dient, wobei bei dem zweiten Bauelement 2 die Rastnut 12 und die Rastleiste 10 verriegelt sind und von der Distanz des Horizontalelements H gehalten werden. Das Horizontalelement H selber wird wiederum aufgrund der Erdanziehungskraft E in dem Korpus 19 gehalten.

Figur 6 zeigt einen erfindungsgemäßen Flachdübel 3 in einer weiteren Ausführungsvariante, wobei der Flachdübel 3 eine Federzunge 20 aufweist. Der Flachdübel 3 ist in einer Draufsicht gezeigt, wobei die Federzunge 20 eine hier dargestellt rechteckige Konfiguration aufweist. Die Federzunge 20 selbst erstreckt sich von einer Seitenkante 21 des Flachdübels 3 aus zu einer Mittellängsachse 22 des Flachdübels 3. Der Flachdübel 3 selbst ist in zwei Seitenabschnitte, erster Abschnitt 4 und zweiter Abschnitt 6 aufgeteilt. An dem ersten Abschnitt 4 und an dem zweiten Abschnitt 6 ist jeweils außen umlaufend an verschiedenen Seiten eine Rastleiste 16 ausgebildet. Die Federzunge 20 ist in dem zweiten Abschnitt 6 ausgebildet, wobei die Federzunge 20 auf die Bildebene bezogen nach unten orientiert ist, so dass sie sich in die gleiche Seite erstreckt, in die sich es auch die Rastleiste 16 des ersten Abschnittes 4 erstreckt. Die Federzunge 20 ist von einem Spalt 23 umgeben, der es ermöglicht zum einen die Herstellung zu realisieren, zum anderen die Federzunge 20 auch bei auftretenden Bauteiltoleranzen derart zu bewegen, dass sie entgegengesetzt ihrer Federkraft in Richtung zur Figur 6 nicht näher dargestellten Mittellängsebene des Flachdübels 3 bewegt werden kann und zurück.

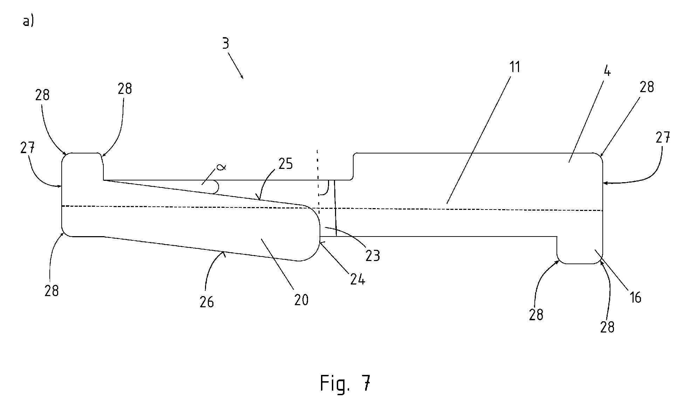

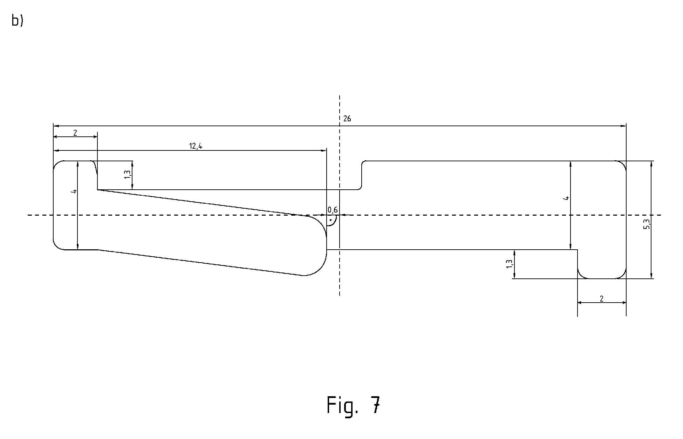

Figur 7a und 7b zeigen einen Querschnitt durch den erfindungsgemäßen Flachdübel gemäß zweiter Ausführungsform entlang der Schnittlinie VII-VII in Figur 6, wobei in Figur 7b bevorzugte Bemaßungen eines Flachdübels 3 mit Federzunge 20 in Millimeterangaben dargestellt sind und in Figur 7a die Querschnittsansicht näher erläutert ist. Die Federzunge 20 steht gegenüber der Mittellängsebene 11 des erfindungsgemäßen Flachdübels 3 auf die Bildebene bezogen nach unten über, so dass sie in die gleiche Richtung orientiert ist, wie die Rastleiste 16 des ersten Abschnittes 4. Eine Stirnseite 24 der Federzunge 20 ist bevorzugt in einem rechten Winkel zu der Mittellängsebene 11 des Flachdübels 3 orientiert ausgebildet. Die Federzunge 20 ist weiterhin bevorzugt in einem Winkel α zu der Mittellängsebene 11 angeordnet. Die Stirnseite 24 der Federzunge 20 ist zu einer Oberseite 25 und zu einer Unterseite 26 der Federzunge 20 übergehend abgerundet ausgebildet. Hierdurch ergibt sich der Vorteil, dass die Federzunge 20 in den Spalt entgegen der Federkraft bewegbar ist, ohne an dem Flachdübel 3 selbst zur Anlage zu kommen oder aber bei Eingliederung eines Verschmutzungspartikels diesen aufgrund der Abschrägung aus dem Spalt herausdrückt. Ferner sind auch an den jeweiligen Außenseiten 27 des Flachdübels 3 sowie an den Rastleisten 16 Rundungen 28 ausgebildet, so dass der erfindungsgemäße Flachdübel 3 besonders einfach in nicht näher dargestellte Nuten eindrehbar ist und auch aus diesen wieder herausdrehbar ist, ohne zu verkanten.

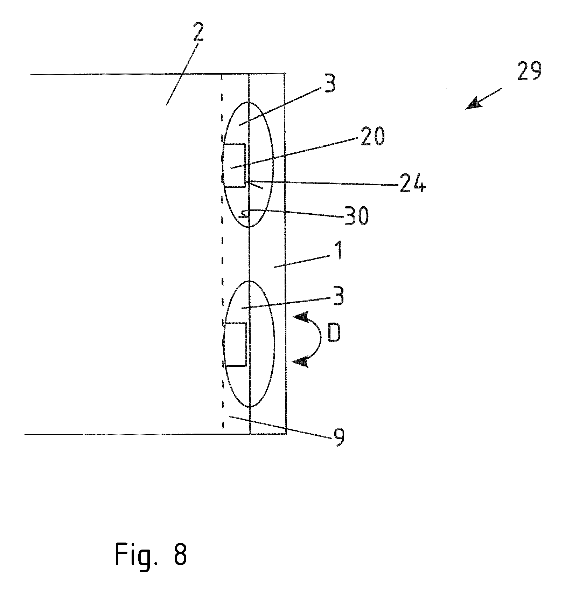

Figur 8 zeigt weiterhin eine erfindungsgemäße Verbindung unter Eingliederung von hier dargestellt zwei Flachdübeln 3, wobei die Federzungen 20 mit ihrer Stirnseite 24 an einer Seitenfläche 30 des ersten Bauelementes 1 formschlüssig zur Anlage kommen. Ferner dargestellt ist in Schnittansicht die Schiebenut 9, wobei optional in der hier dargestellten Endposition zwischen erstem und zweitem Bauelement 1, 2 in der Schiebenut 9 Rastnuten 12 angeordnet sein können. Durch die formschlüssige Anlage von der Stirnseite 24 der Federzunge 20 zu der Seitenfläche 30 ist eine Drehbewegung D des Flachdübels 3 zu dem ersten Bauelement 1 nicht möglich.

### Bezugszeichen:

- 1 -: erstes Bauelement
- 2 -: zweites Bauelement
- 3 -: Flachdübel
- 4 -: erster Abschnitt zu 3
- 5 -: Nut zu 1
- 6 -: zweiter Abschnitt zu 3
- 7 -: Oberfläche zu 8
- 8 -: Seitenfläche zu 1
- 9 -: Schiebenut
- 10 -: Rastleiste zu 6
- 11 -: Mittellängsebene zu 3
- 12 -: Rastnut
- 13 -: Fräser
- 14 -: Ende zu 13
- 15 -: Frässtufe
- 16 -: Rastleiste zu 4
- 17 -: Nut für 16
- 18 -: Stecksystem
- 19 -: Korpus
- 20 -: Federzunge
- 21 -: Seitenkante
- 22 -: Mittellängsachse
- 23 -: Spalt
- 24 -: Stirnseite
- 25 -: Oberseite
- 26 -: Unterseite
- 27 -: Außenseite
- 28 -: Rundung
- 29 -: Verbindung
- 30 -: Seitenfläche zu 1
- α -: Winkel
- β -: Winkel
- D -: Drehbewegung
- VR -: Vertikalrichtung
- E -: Erdanziehungskraft
- H -: Höhe
- X -: X-Richtung
- Y -: Y-Richtung
- t -: tiefster Punkt
- V -: Vertikalelement
- H -: Horizontalelement
- VS -: Vorderseite
- RS -: Rückseite

## Patentansprüche

1. Flachdübel (3) zum Einsatz zwischen zwei Bauelementen (1, 2), insbesondere zum Verbinden zweier Bauelemente (1, 2), wobei der Flachdübel (3) einen einstückigen ellipsenförmigen Grundkörper aufweist, wobei der Grundkörper in zwei Seitenabschnitte (4, 6) aufgeteilt ist, wobei in dem Grundkörper eine Federzunge (20) in einem Winkel (α) zwischen 1 und 40 Grad zu einer Grundkörperebene abstehend ausgebildet ist, wobei die Federzunge (20) von einer Seitenkante (21) aus sich zu einer Mittellängsachse (22) erstreckend ausgebildet ist, **dadurch gekennzeichnet, dass** der Flachdübel (3) an zumindest einer Seitenkante (21) einer der zwei Seitenabschnitte (4, 6) eine gegenüber dem Grundkörper überstehende Rastleiste (10, 16) zum formschlüssigen Einsatz in einem Bauelement (1, 2) aufweist.

2. Flachdübel nach Anspruch 1, **dadurch gekennzeichnet, dass** an jedem Seitenabschnitt (4, 6) zumindest abschnittsweise umlaufend eine Rastleiste (10, 16) ausgebildet ist, wobei die beiden Rastleisten (10, 16) in entgegengesetzte Richtungen orientiert sind.

3. Flachdübel nach Anspruch 1 oder 2, **dadurch gekennzeichnet, dass** die Federzunge (20) sich in die gleiche Richtung erstreckt, wie die Rastleiste (16) des Seitenabschnittes (4), der der Federzunge (20) gegenüberliegt.

4. Flachdübel nach einem der Ansprüche 1 bis 3, **dadurch gekennzeichnet, dass** die Federzunge (20) sich bis nahe an die Mittellängsachse (22) des Flachdübels (3) erstreckt.

5. Flachdübel nach einem der vorhergehenden Ansprüche, **dadurch gekennzeichnet, dass** die Federzunge (20) eine Stirnseite (24) aufweist, wobei die Stirnseite (24) orthogonal zu einer Grundkörperebene angeordnet ist.

6. Flachdübel nach einem der vorhergehenden Ansprüche, **dadurch gekennzeichnet, dass** die Federzunge (20) in einem Winkel (α) zwischen 2 und 30 Grad und insbesondere zwischen 3 und 20 Grad gegenüber der Grundkörperebene abstehend ausgebildet ist.

7. Flachdübel nach Anspruch 5, **dadurch gekennzeichnet, dass** die Stirnseite (24) der Federzunge (20) an Ihren Übergängen zu einer Oberseite (25) und einer Unterseite (26) der Federzunge (20) abgerundet ausgebildet ist.

8. Flachdübel nach einem der vorhergehenden Ansprüche, **dadurch gekennzeichnet, dass** die Federzunge (20) einstückig und werkstoffeinheitlich aus dem Grundkörper ausgebildet ist.

9. Flachdübel nach einem der vorhergehenden Ansprüche, **dadurch gekennzeichnet, dass** die Federzunge (20) eine quadratische oder rechteckige Konfiguration aufweist.

10. Flachdübel nach einem der vorhergehenden Ansprüche, **dadurch gekennzeichnet, dass** mindestens zwei Federzungen (20) in dem Flachdübel (3) ausgebildet sind, insbesondere sind die Federzungen (20) auf einem Seitenabschnitt (4, 6) ausgebildet und/oder auf beiden Seitenabschnitten (4, 6) ausgebildet sind, bevorzugt weisen die Federzungen (20) der zwei Seitenabschnitte in voneinander verschiedene Richtungen.

11. Verbindung zweier Bauelemente, wobei die Bauelemente mit einem Nut- und Feder Stecksystem unter Eingliederung eines Flachdübels (3), ineinander steckbar sind und formschlüssig zueinander lagefixierbar sind, **dadurch gekennzeichnet, dass** eine Seitenfläche eines ersten Bauelements (1) eine kreisabschnittsförmige Nut (5) aufweist, wobei die Nut (5) in einem Winkel (β) von 45 bis 135 Grad, insbesondere 90 Grad zu einer Seitenfläche des ersten Bauelementes (1) angeordnet ist und der Flachdübel (3) nach mindestens Anspruch 1 in die Nut (5) formschlüssig eingedreht ist.

12. Verbindung nach Anspruch 11, **dadurch gekennzeichnet, dass** die Federzunge (20) mit Ihrer Stirnseite (24) an einer Seitenfläche des ersten Bauelementes (1) formschlüssige zur Anlage kommend angeordnet ist, wobei der Formschluss zwischen Seitenfläche und Stirnseite (24) den Flachdübel (3) in der Nut (5) lagefixiert.

13. Verbindung nach Anspruch 11 oder 12, **dadurch gekennzeichnet, dass** das zweite Bauelement (2) eine Schiebenut (9) aufweist, wobei der Teile des Flachdübels (3), der gegenüber der Seitenfläche des ersten Bauelementes (1) übersteht, von der Schiebenut (9) aufgenommen ist und die Federzunge (20) an einer Innenseite der Schiebenut (9) zur Anlage kommt, wobei die der Federzunge (20) gegenüberliegende Grundkörperfläche an einer der der Nutinnenseite gegenüberliegenden Auflageninnenseite zur Anlage kommt.

14. Verbindung nach einem der Ansprüche 11 bis 13, **dadurch gekennzeichnet, dass** die Federzunge (20) in dem zweiten Bauteil (2) in einer Federzungenrastnut formschlüssig zur Anlage kommend angeordnet ist.

## Claims

1. Flat dowel (3) for insertion between two components (1, 2), especially for connecting two components (1,2), the flat dowel (3) comprising a one-piece elliptical base body, the base body being divided into two lateral portions (4, 6), a flexible tongue (20) being configured to protrude from the base body at an angle (α) of between land 40 degrees to a plane of the base body, the flexible tongue (20) being configured to extend from a side edge (21) to a central longitudinal axis (22), **characterised in that** the flat dowel (3) comprises, on at least one side edge (21) of one of the two side portions (4, 6), an index bar (10, 16) protruding relative to the base body, for positively locking insertion in a component (1, 2).

2. Flat dowel according to claim 1, **characterised in that** an index bar (10, 16) is formed around at least part of the circumference of each lateral portion (4, 6), the two index bars (10, 16) being oriented in opposite directions.

3. Flat dowel according to claim 1 or 2, **characterised in that** the flexible tongue (20) extends in the same direction as the index bar (16) of the lateral portion (4) which faces the flexible tongue (20).

4. Flat dowel according to one of claims 1 to 3, **characterised in that** the flexible tongue (20) extends almost to the central longitudinal axis (22) of the flat dowel (3).

5. Flat dowel according to one of the preceding claims, **characterised in that** the flexible tongue (20) has a front side (24), the front side (24) being arranged orthogonally to a base body plane.

6. Flat dowel according to one of the preceding claims, **characterised in that** the flexible tongue (20) is configured to protrude relative to the base body plane at an angle (α) of between 2 and 30 degrees and, in particular, between 3 and 20 degrees.

7. Flat dowel according to claim 5, **characterised in that** the front side (24) of the flexible tongue (20) is rounded in configuration at its transitions to an upper side (25) and a lower side (26) of the flexible tongue (20).

8. Flat dowel according to one of the preceding claims, **characterised in that** the flexible tongue (20) is formed in one piece from the base body and using the same material.

9. Flat dowel according to one of the preceding claims, **characterised in that** the flexible tongue (20) has a square or rectangular configuration.

10. Flat dowel according to one of the preceding claims, **characterised in that** at least two flexible tongues (20) are formed in the flat dowel (3), the flexible tongues (20) being formed in particular on one lateral portion (4, 6) and/or on both lateral portions (4, 6), the flexible tongues (20) of the two side portions preferably, pointing in different directions.

11. Connection of two components, wherein the components can be fitted into each other and positively fixed in position relative to one another by means of a tongue and groove connection system incorporating a flat dowel (3), **characterised in that** a lateral surface of a first component (1) has a groove (5) in the shape of a segment of a circle, the groove (5) being arranged at an angle (β) of 45 to 135 degrees, particularly 90 degrees, to a lateral surface of the first component (1), and the flat dowel (3) according to at least claim 1 is rotated into the groove (5) in a positively locking engagement.

12. Connection according to claim 11, **characterised in that** the flexible tongue (20) is arranged with its front side (24) in positively locking contact with a lateral surface of the first component (1), the positive engagement between the lateral surface and front side (24) securely holding the flat dowel (3) in position in the groove (5).

13. Connection according to claim 11 or 12, **characterised in that** the second component (2) has a sliding groove (9), the part of the flat dowel (3) which protrudes relative to the lateral surface of the first component (1) being accommodated in the sliding groove (9) and the flexible tongue (20) coming into contact with an inner side of the sliding groove (9), while the base body surface facing the flexible tongue (20) comes into contact with one of the inner bearing sides facing the inside of the groove.

14. Connection according to one of claims 11 to 13, **characterised in that** the flexible tongue (20) in the second component (2) is arranged to engage positively in a flexible tongue engagement groove.

## Revendications

1. Cheville plate (3) destinée à être placée entre deux éléments de construction (1, 2), notamment pour assembler deux éléments de construction (1, 2), la cheville plate (3) comportant un corps de base d'une seule pièce et en forme d'ellipse, le corps de base étant divisé en deux parties latérales (4, 6), une languette élastique (20) étant conçue dans le corps de base de manière à s'écarter avec un angle (α) entre 1 et 40 degrés par rapport à un plan de corps principal, la languette élastique (20) étant conçue de manière à s'étendre à partir d'une arête latérale (21) vers un axe longitudinal médian (22), **caractérisée en ce que** la cheville plate (3) comporte sur au moins une arête latérale (21) de l'une des deux parties latérales (4, 6) un listeau (10, 16) qui dépasse du corps de base et qui est destiné à être placé par concordance de formes dans un élément de construction (1, 2).

2. Cheville plate selon la revendication 1, **caractérisée en ce qu'**un listeau (10, 16) est conçu au moins en partie de manière périphérique sur chaque partie latérale (4, 6), les deux listeaux (10, 16) étant orientés dans des directions opposées.

3. Cheville plate selon la revendication 1 ou 2, **caractérisée en ce que** la languette élastique (20) s'étend dans la même direction que le listeau (16) de la partie latérale (4) qui est à l'opposé de la languette élastique (20).

4. Cheville plate selon l'une des revendications 1 à 3, **caractérisée en ce que** la languette élastique (20) s'étend jusqu'à proximité de l'axe longitudinal médian (22) de la cheville plate (3).

5. Cheville plate selon l'une des revendications précédentes, **caractérisée en ce que** la languette élastique (20) comporte un côté frontal (24), le côté frontal (24) étant agencé perpendiculairement à un plan de corps de base.

6. Cheville plate selon l'une des revendications précédentes, **caractérisée en ce que** la languette élastique (20) est conçue pour s'écarter du plan de corps de base avec un angle (α) compris entre 2 et 30 degrés et notamment entre 3 et 20 degrés.

7. Cheville plate selon la revendication 5, **caractérisée en ce que** le côté frontal (24) de la languette élastique (20) est conçu arrondi au niveau de ses transitions vers un côté supérieur (25) et un côté inférieur (26) de la languette élastique (20).

8. Cheville plate selon l'une des revendications précédentes, **caractérisée en ce que** la languette élastique (20) est conçue d'une seule pièce et dans le même matériau à partir du corps de base.

9. Cheville plate selon l'une des revendications précédentes, **caractérisée en ce que** la languette élastique (20) a une configuration carrée ou rectangulaire.

10. Cheville plate selon l'une des revendications précédentes, **caractérisée en ce qu'**au moins deux languettes élastiques (20) sont conçues dans la cheville plate (3), les languettes élastiques (20) étant conçues notamment sur une partie latérale (4, 6) et/ou sur les deux parties latérales (4, 6) et les languettes élastiques (20) des deux parties latérales étant dirigées de préférence dans des directions différentes l'une de l'autre.

11. Assemblage de deux éléments de construction, les éléments de construction pouvant être enfichés l'un dans l'autre avec un système d'enfichage à rainure et languette en insérant une cheville plate (3) et pouvant être fixés en position l'un par rapport à l'autre par concordance de formes, **caractérisé en ce qu'**une surface latérale d'un premier élément de construction (1) comporte une rainure (5) en forme de segment de cercle, la rainure (5) étant agencée avec un angle (β) de 45 à 135 degrés, notamment de 90 degrés, par rapport à une surface latérale du premier élément de construction (1) et la cheville plate (3) selon au moins la revendication 1 étant introduite en tournant dans la rainure (5) par concordance de formes.

12. Assemblage selon la revendication 11, **caractérisé en ce que** la languette élastique (20) est agencée pour venir s'appuyer par concordance de formes avec son côté frontal (24) contre la surface latérale du premier élément de construction (1), la concordance de formes entre surface latérale et côté frontal (24) fixant en position la cheville plate (3) dans la rainure (5).

13. Assemblage selon la revendication 11 ou 12, **caractérisé en ce que** le deuxième élément de construction (2) comporte une rainure de coulissement (9), les parties de la cheville plate (3) qui dépassent de la surface latérale du premier élément de construction (1) étant reçues dans la rainure de coulissement (9) et la languette élastique (20) venant s'appuyer contre un côté intérieur de la rainure de coulissement (9), la surface de corps de base à l'opposé de la languette élastique (20) venant s'appuyer contre un côté intérieur d'appui à l'opposé du côté intérieur de rainure.

14. Assemblage selon l'une des revendications 11 à 13, **caractérisé en ce que** la languette élastique (20) est agencée dans le deuxième élément de construction (2) de manière à venir s'appuyer par concordance de formes dans une rainure d'enclenchement de languette élastique.
